# EUROPEAN PATENT APPLICATION

(11) **EP 3 241 728 A1**
(43) Date of publication of application: **08.11.2017**
(21) Application number: 16885455.2
(22) Date of filing: 09.11.2016
(51) Int. Cl.: B62K 3/00, B62K 11/00, B62M 6/90

(54) **ELECTRIC BALANCING VEHICLE**

(30) Priority: 27.01.2016 CN 201620076917 U
(71) Applicant: Zhang, Zhao, Shenzhen, Guangdong 518000 (CN)
(72) Inventor: LU, Nanfang, Shenzhen Guangdong 518000 (CN)
(74) Representative: Inchingalo, Simona
(86) International application number: PCT/CN2016/105199
(87) International publication number: WO 2017/128808

(57) **Abstract**

The present disclosure relates to a self-balancing vehicle, which includes an intermediate bracket, a first connecting shaft, a second connecting shaft, a first pedal assembly, a second pedal assembly, a first motor and a second motor. One end of the first connecting shaft and one end of the second connecting shaft are respectively disposed on two opposite sides of the intermediate bracket, and are rotatable with respect to the intermediate bracket, respectively, the other end of the first connecting shaft is fixed to the first pedal assembly, the other end of the second connecting shaft is fixed to the second pedal assembly, the first motor includes a first output shaft rotatably disposed on the first pedal assembly, the second motor includes a second output shaft rotatably disposed on the second pedal assembly.

## Description

### CROSS REFERENCE TO RELATED APPLICATION

This application claims priority to Chinese Patent Application No. 201620076917.4, entitled "TWO-AXIS TWO-WHEEL SELF-BALANCING VEHICLE" filed on January 27, 2016, the contents of which are expressly incorporated by reference herein in its entirety.

### FIELD OF THE INVENTION

The present disclosure relates to the field of self-balancing vehicles, and more particularly relates to a self-balancing vehicle.

### BACKGROUND OF THE INVENTION

A self-balancing vehicle is also known as a somatosensory vehicle, a sensor controlled vehicle, or a two-wheeled vehicle. The operating principle thereof is mainly established on a basic principle called "dynamic stabilization", the change of car attitudes is detected by a gyroscope and an acceleration sensor inside the vehicle body, and a motor is accurately driven by a servo control system to adjust correspondingly, in order to keep the balance of the system.

In the conventional self-balancing vehicle, the main bodies on both the left and right sides are usually connected to each other via a shaft in the middle. During use, such structure may suffer the problem that the rotation is not flexible and the turning cannot be controlled when the speed is too large.

### SUMMARY

Therefore, it is necessary to provide a self-balancing vehicle, which can rotate flexibly and effectively improve the turning controllability.

A self-balancing vehicle includes an intermediate bracket, a first connecting shaft, a second connecting shaft, a first pedal assembly, a second pedal assembly, a first motor, and a second motor;
wherein one end of the first connecting shaft and one end of the second connecting shaft are respectively disposed on two opposite sides of the intermediate bracket, the first connecting shaft and the second connecting shaft are arranged at intervals from one another and are located at the same height, the first connecting shaft and the second connecting shaft are rotatable with respect to the intermediate bracket, respectively;
wherein the other end of the first connecting shaft is fixed to the first pedal assembly, the other end of the second connecting shaft is fixed to the second pedal assembly, the first pedal assembly and the second pedal assembly are located on both sides of the intermediate bracket, respectively;
wherein the first motor includes a first output shaft, the first output shaft is rotatably disposed on the first pedal assembly, the second motor includes a second output shaft, the second output shaft is rotatably disposed on the second pedal assembly.

In one embodiment, one end of the first connecting shaft is sleeved by a first bearing, one end of the second connecting shaft is sleeved by a second bearing.

In one embodiment, the intermediate bracket defines a first receiving hole and a second receiving hole, the first receiving hole and the second receiving hole are spaced apart from one another, one end of the first connecting shaft extends through the first receiving hole, one end of the second connecting shaft extends through the second receiving hole.

In one embodiment, a bottom of the first pedal assembly is provided with a first guiding post, the first guiding post is sleeved by a first spring, the intermediate bracket defines a first guiding hole, one end of the first guiding post extends through the first guiding hole, a bottom of the second pedal assembly is provided with a second guiding post, the second guiding post is sleeved by a second spring, the intermediate bracket defines a second guiding hole, one end of the second guiding post extends through the second guiding hole.

In one embodiment, the self-balancing vehicle further includes a battery pack, wherein the battery pack is removably mounted at a bottom of the intermediate bracket and is located on a middle position of the bottom.

In one embodiment, the battery pack is mounted at the bottom of the intermediate bracket via a snap-fit.

In one embodiment, the first pedal assembly includes a first pedal portion and a first support frame, the first pedal portion is disposed on the first support frame, the other end of the first connecting shaft is disposed on the first support frame, the first output shaft is disposed on the first support frame; the second pedal assembly includes a second pedal portion and a second support frame, the second pedal portion is disposed on the second support frame, the other end of the second connecting shaft is disposed on the second support frame, the second output shaft is disposed on the second support frame.

In one embodiment, the first pedal portion includes a first upper housing, a first pedal, and a first pedal bracket, the first pedal is located between the first upper housing and the first pedal bracket, the first pedal bracket is disposed on the first support frame; the second pedal portion includes a second upper housing, a second pedal, and a second pedal bracket, the second pedal is located between the second upper housing and the second pedal bracket, the second pedal bracket is disposed on the second support frame.

In one embodiment, the first pedal assembly further includes a first pressure sensor, the first pressure sensor is disposed on the first support frame; the second pedal assembly further includes a second pressure sensor, the second pressure sensor is disposed on the second support frame.

In one embodiment, the self-balancing vehicle further includes a first pressing block and a second pressing block, wherein the first connecting shaft is fixed to the first pedal assembly via the first pressing block, the second connecting shaft is fixed to the second pedal assembly via the second pressing block; and/or
the self-balancing vehicle further includes a third pressing block and a fourth pressing block, wherein the first output shaft is rotatably disposed on the first pedal assembly via the third pressing block, the second output shaft is rotatably disposed on the second pedal assembly via the fourth pressing block.

In one embodiment, the self-balancing vehicle further includes a first chip assembly and a second chip assembly, the first chip assembly includes a first chip, a first chip holder, and a first chip cartridge, the first chip is disposed on the first chip holder, the first chip holder is disposed in the first chip cartridge, the first chip cartridge is disposed on the first pedal assembly; the second chip assembly includes a second chip, a second chip holder, and a second chip cartridge, the second chip is disposed on the second chip holder, the second chip holder is disposed in the second chip cartridge, the second chip cartridge is disposed on the second pedal assembly.

In one embodiment, the first connecting shaft is a hollow shaft, the second connecting shaft is a hollow shaft; and/or
the first output shaft is hollow, the second output shaft is hollow.

In one embodiment, the first connecting shaft is sleeved by a first torsional spring, the second connecting shaft is sleeved by a second torsional spring.

In one embodiment, the intermediate bracket includes a bracket body and a bracket lower cover, the bracket body defines a first receiving hole and a second receiving hole, the first receiving hole and the second receiving hole are spaced apart from one another, one end of the first connecting shaft extends through the first receiving hole, one end of the second connecting shaft extends through the second receiving hole, the battery pack is removably disposed on a bottom of the bracket lower cover.

In one embodiment, the first pedal portion includes a first upper housing, a first pedal, and a second pedal bracket, the first pedal bracket is located between the first upper housing and the first pedal, the first upper housing is disposed on the first support frame; the second pedal portion includes a second upper housing, a second pedal, and a second pedal bracket, the second pedal bracket is located between the second upper housing and the second pedal, the second upper housing is disposed on the second support frame.

In one embodiment, the first output shaft and the first connecting shaft are staggeredly arranged at different heights, the second output shaft and the second connecting shaft are staggeredly arranged at different heights.

In one embodiment, a height of the first output shaft from the ground is 12 mm to 17 mm greater than a height of the first connecting shaft from the ground; a height of the second output shaft from the ground is 12 mm to 17 mm greater than a height of the second connecting shaft from the ground.

In one embodiment, the self-balancing vehicle further includes a handle, wherein the handle is disposed on the intermediate bracket.

In one embodiment, the self-balancing vehicle further includes a display screen, wherein the handle includes a handle body and a handle cover, the handle body and the handle cover cooperatively define a receiving cavity, the display screen is received in the receiving cavity.

In one embodiment, the self-balancing vehicle further includes at least one of a headlight, an attitude lamp, a left turn signal, a right turn signal, and a horn.

In the self-balancing vehicle, one end of the first connecting shaft and one end of the second connecting shaft are respectively disposed on two opposite sides of the intermediate bracket, and the first connecting shaft and the second connecting shaft are rotatable with respect to the intermediate bracket, respectively. The other end of the first connecting shaft is fixed to the first pedal assembly, and the other end of the second connecting shaft is fixed to the second pedal assembly. Therefore, the first connecting shaft and the second connecting shaft are used to control the twisting of the first pedal assembly and the second pedal assembly on the left and right sides. The first connecting shaft and the second connecting shaft are independent from each other and do not interfere with each other during traveling, such that the rotation is more flexible. In addition, the first output shaft and the second output shaft are also relatively independent, such that the problem that the first pedal assembly on one side is affected by the second pedal assembly on the other side when rotated can be avoided, thereby effectively improving the turning controllability.

### BRIEF DESCRIPTION OF THE DRAWINGS

The above objects, features and advantages of the present invention will become more apparent by describing in detail embodiments thereof with reference to the accompanying drawings. The components in the drawings are not necessarily drawn to scale, the emphasis instead being placed upon clearly illustrating the principles of the present disclosure. Moreover, in the drawings, like reference numerals designate corresponding parts throughout the views.
FIG. 1 is an exploded view of a self-balancing vehicle according to an embodiment;
FIG. 2 is a perspective view of the self-balancing vehicle of FIG. 1 after assembly;
FIG. 3 is a front elevational view of the self-balancing vehicle of FIG. 2;
FIG. 4 is a top plan view of the self-balancing vehicle of FIG. 2;
FIG. 5 is a right-side elevational view of the self-balancing vehicle of FIG. 2;
FIG. 6 is an exploded view of an self-balancing vehicle according to another embodiment;
FIG. 7 is a cross-sectional view of the self-balancing vehicle of FIG. 6 after assembly;
FIG. 8 is a top plan view of the self-balancing vehicle of FIG. 6 after assembly;
FIG. 9 is a detail view of the self-balancing vehicle of FIG. 6; and
FIG. 10 is another detail of the self-balancing vehicle of FIG. 6.

### DETAILED DESCRIPTION OF THE EMBODIMENTS

In order to make the above and other objects, features and advantages of the present invention become more apparent, the specific embodiments will be described in detail in combination with the accompanying drawings. Numerous specific details are described hereinafter in order to facilitate a thorough understanding of the present disclosure. The various embodiments of the disclosure may, however, be embodied in many different forms and should not be construed as limited to the specific embodiments set forth hereinafter, and people skilled in the art can make similar modifications without departing from the spirit of the present disclosure.

It will be understood that when an element is referred to as being "connected" or "coupled" to another element, it can be directly connected or coupled to the other element or intervening elements may be present. In contrast, if an element is referred to as being "directly connected" or "directly coupled" to another element, there are no intervening elements present. The terms "vertical", "horizontal", "left" and "right" and other similar expressions used herein is for the purpose of describing particular embodiments only and is not intended to be limiting of the invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

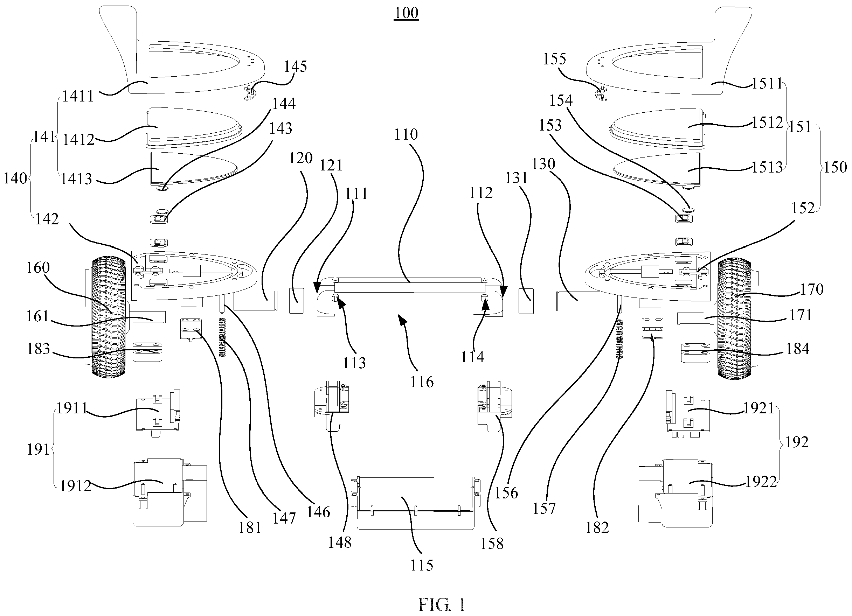

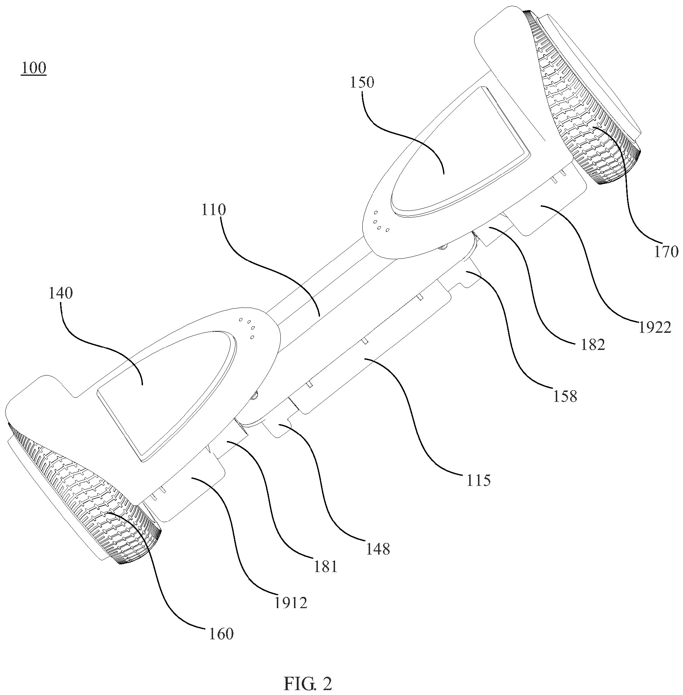

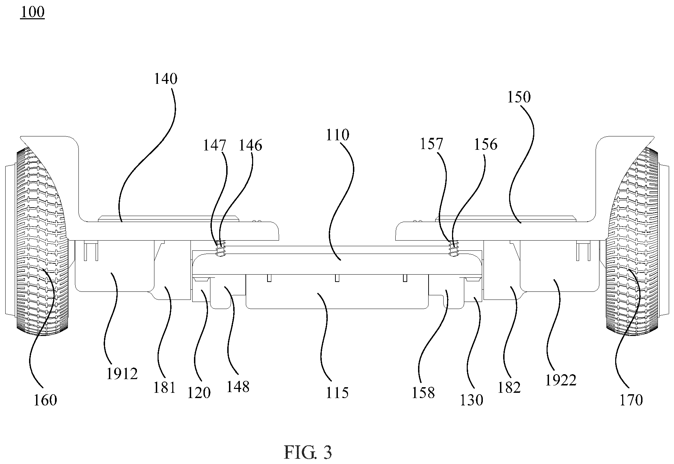

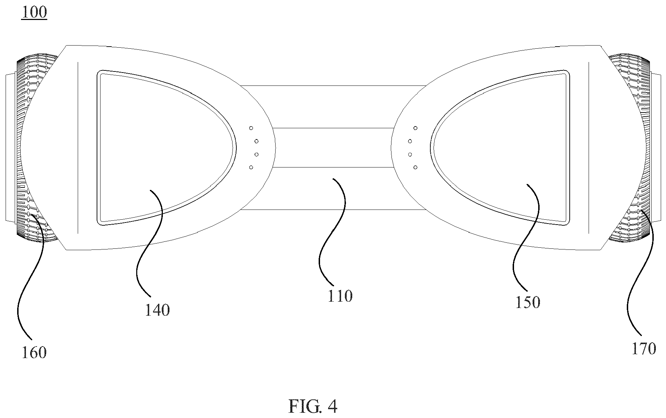

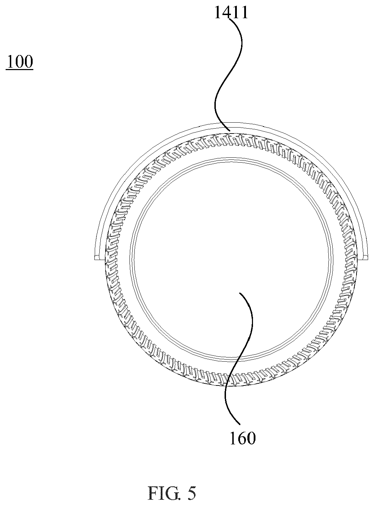

Referring to FIG. 1 to FIG. 5, a self-balancing vehicle 100 according to an embodiment includes an intermediate bracket 110, a first connecting shaft 120, a second connecting shaft 130, a first pedal assembly 140, a second pedal assembly 150, a first motor 160, and a second motor 170.

One end of the first connecting shaft 120 and one end of the second connecting shaft 130 are respectively disposed on two opposite sides of the intermediate bracket 110, the first connecting shaft 120 and the second connecting shaft 130 are spaced apart from one another and are located at the same height. For example, the first connecting shaft 120 and the second connecting shaft 130 are substantially symmetrically disposed on both sides of the intermediate bracket 110, on the left side and right side, respectively.

The first connecting shaft 120 and the second connecting shaft 130 are rotatable with respect to the intermediate bracket 110, respectively. For example, one end of the first connecting shaft 120 is sleeved by a first bearing 121, and one end of the second connecting shaft 130 is sleeved by a second bearing 131 to effect that the first connecting shaft 120 and the second connecting shaft 130 are rotatable with respect to the intermediate bracket 110, respectively.

The opposite sides of the intermediate bracket 110 define a first receiving hole 111 and a second receiving hole 112, the first receiving hole 111 and the second receiving hole 112 are spaced apart from one another. One end of the first connecting shaft 120 extends through the first receiving hole 111, and one end of the second connecting shaft 130 extends through the second receiving hole 112. The one end of the first connecting shaft 120 and the one end of the second connecting shaft 130 are spaced apart from one another, such that the first connecting shaft 120 and the second connecting shaft 130 do not affect each other. The first bearing 121 is received in the first receiving hole 111, and the second bearing 131 is received in the second receiving hole 112.

Specifically, in the illustrated embodiment, the first bearing 121 and the second bearing 131 may both be needle bearings to adapt a case where a radial dimension is small. Of course, in alternative embodiments, the first bearing 121 and the second bearing 131 may also be other types of bearings.

The first connecting shaft 120 may be a hollow shaft, the second connecting shaft 130 may also be a hollow shaft, such that weights of the first connecting shaft 120 and the second connecting shaft 130 is reduced. Thus, the weight of the entire self-balancing vehicle 100 may also be reduced.

The other end of the first connecting shaft 120 is fixed to the first pedal assembly 140. The other end of the second connecting shaft 130 is fixed to the second pedal assembly 150. The first pedal assembly 140 and the second pedal assembly 150 are located on both sides of the intermediate bracket 110, respectively. In other words, the first pedal assembly 140 and the intermediate bracket 110 are located on opposite ends of the first connecting shaft 120, respectively. The second pedal assembly 150 and the intermediate bracket 110 are located on opposite ends of the second connecting shaft 130, respectively.

Specifically, in the illustrated embodiment, the self-balancing vehicle further includes a first pressing block 181 and a second pressing block 182. The first connecting shaft 120 is fixed to the first pedal assembly 140 via the first pressing block 181. The second connecting shaft 130 is fixed to the second pedal assembly 150 via the second pressing block 182. For example, the first pressing block 181 may be fixed to the first pedal assembly 140 by means of a fastener such as a screw, such that the first connecting shaft 120 extends through an annular space which is cooperatively defined by the first pressing block 181 and the first pedal assembly 140. The second pressing block 182 is same as the first pressing block 181.

The first pedal assembly 140 includes a first pedal portion 141 and a first support frame 142. The first pedal portion 141 is disposed on the first support frame 142. The other end of the first connecting shaft 120 is disposed on the first support frame 142. For example, the first support frame 142 may be made of a hardware material. Of course, in alternative embodiments, the first support frame 142 may also be made of other materials.

The first pedal portion 141 includes a first upper housing 1411, a first pedal 1412, and a first pedal bracket 1413. The first pedal 1412 is located between the first upper housing 1411 and the first pedal bracket 1413, the first pedal bracket 1413 is disposed on the first support frame 142. Specifically, the first pedal 1412 may be made of a silicone material. The first upper housing 1411 and the first support frame 142 can be connected to each other via bolts. A first indicator lamp 145 can also be provided, which is embedded in the first upper housing 1411.

The second pedal assembly 150 includes a second pedal portion 151 and a second support frame 152. The second pedal portion 151 is disposed on the second support frame 152. The other end of the second connecting shaft 130 is disposed on the second support frame 152. For example, the second support frame 152 may be made of a hardware material. Of course, in alternative embodiments, the second support frame 152 may also be made of other materials.

The second pedal portion 151 includes a second upper housing 1511, a second pedal 1512, and a second pedal bracket 1513. The second pedal 1512 is located between the second upper housing 1511 and the second pedal bracket 1513, the second pedal bracket 1513 is disposed on the second support frame 152. Specifically, the second pedal 1512 may be made of a silicone material. The second upper housing 1511 and the second support frame 142 can be connected to each other via bolts. A second indicator lamp 155 can also be provided, which is embedded in the second upper housing 1511.

The first pedal assembly 140 further includes a first pressure sensor 143, which is disposed on the first support frame 142. For example, the first support frame 142 may define a panel hole, and then the first pressure sensor 143 is accommodated in the panel hole. A pad 144 may be further provided between the first pressure sensor 143 and the first pedal bracket 1413.

The second pedal assembly 150 further includes a second pressure sensor 153, which is disposed on the second support frame 152. For example, the second support frame 152 may define a panel hole, and then the second pressure sensor 153 is accommodated in the panel hole. A pad 154 may be further provided between the second pressure sensor 153 and the second pedal bracket 1513.

The first motor 160 includes a first output shaft 161, which is rotatably disposed on the first pedal assembly 140. Specifically, the first output shaft 161 is rotatably disposed on the first support frame 142. For example, the first output shaft 161 may be rotatably disposed on the first pedal assembly 140 via a third pressing block 183. Specifically, the first output shaft 161 is rotatably disposed on the first support frame 142 via the third pressing block 183. The outer side of the first motor 160 may form a normally travelling wheel by providing an outer tire.

The second motor 170 includes a second output shaft 171, which is rotatably disposed on the second pedal assembly 150. Specifically, the second output shaft 171 is rotatably disposed on the second support frame 152. For example, the second output shaft 171 may be rotatably disposed on the second pedal assembly 150 via a fourth pressing block 184. Specifically, the second output shaft 171 is rotatably disposed on the second support frame 152 via the fourth pressing block 182. The outer side of the second motor 170 may form a normally travelling wheel by providing an outer tire.

The first output shaft 161 is hollow, the second output shaft 171 is hollow, thereby reducing weights of the first output shaft 161 and the second output shaft 171, such that the weight of the entire self-balancing vehicle 100 may be reduced.

A bottom of the first pedal assembly 140 is provided with a first guiding post 146. Specifically, the first guiding post 146 is located on the first support frame 142. The first guiding post 146 is sleeved by a first spring 147, the intermediate bracket 110 defines a first guiding hole 113, one end of the first guiding post 146 extends inside the first guiding hole 113.

A bottom of the second pedal assembly 150 is provided with a second guiding post 156. Specifically, the second guiding post 156 is located on the second support frame 152. The second guiding post 156 is sleeved by a second spring 157, the intermediate bracket 110 defines a second guiding hole 114, one end of the second guiding post 156 extends inside the second guiding hole 114.

Specifically, in the illustrated embodiment, the first pedal assembly 140 further includes a first lower housing 148, the second pedal assembly 150 further includes a second lower housing 158. One end of the first guiding post 146 extends inside the first lower housing 148, and one end of the second guiding post 156 extends inside the second lower housing 158.

Specifically, in the illustrated embodiment, the self-balancing vehicle 100 further includes a battery pack 115. The battery pack 115 is removably mounted at a bottom of the intermediate bracket 110 and is located on a middle position of the bottom. For example, a middle portion of the intermediate bracket 110 defines a receiving groove 116 to accommodate the battery pack 115. Specifically, the battery pack 115 may be provided in the receiving groove 116 via a snap-fit. Therefore, the intermediate bracket 110 serves as a bridge connecting the first connecting shaft 120 and the second connecting shaft 130 as well as a battery case in which the battery pack 115 is mounted.

Since the battery pack 115 is mounted at the bottom of the intermediate bracket 110, the center of gravity of the entire self-balancing vehicle 100 is lowered, thereby increasing the stability during travel. The battery pack 115 is assembled to the intermediate bracket 110 via a snap-fit in a quick-release manner, such that it is convenient to disassemble and install, and is advantageous for ventilation, heat dissipation and replacement. During transportation, the battery pack 115 can be disassembled separately, which can greatly improve the safety of the transportation.

Specifically, in the illustrated embodiment, a first chip assembly 191 and a second chip assembly 192 are further included. The first chip assembly 191 includes a first chip 1911, a first chip holder (not shown), and a first chip cartridge 1912. The first chip 1911 is disposed on the first chip holder, and the first chip holder is disposed on the first support frame 142. The first chip 1911 and the first chip holder are both received in the first chip cartridge 1912 to protect the first chip 1911 from being affected by external moisture. Specifically, the first pressing block 181 also can be received in the first chip cartridge 1912 to make the structure more compact and occupy less external space.

The second chip assembly 192 includes a second chip 1921, a second chip holder (not shown), and a second chip cartridge 1922. The second chip 1921 is disposed on the second chip holder, and the second chip holder is disposed on the second support frame 152. The second chip 1921 and the second chip holder are both received in the second chip cartridge 1922 to protect the second chip 1921 from being affected by external moisture. Specifically, the second pressing block 182 also can be received in the second chip cartridge 1922 to make the structure more compact and occupy less external space. By the detection and control of the built-in first chip 1911 and the second chip 1921, various required operations of the self-balancing vehicle 100 can be achieved.

In the self-balancing vehicle 100, one end of the first connecting shaft 120 and one end of the second connecting shaft 130 are respectively disposed on two opposite sides of the intermediate bracket 110, and the first connecting shaft 120 and the second connecting shaft 130 are rotatable with respect to the intermediate bracket 110, respectively. The other end of the first connecting shaft 120 is fixed to the first pedal assembly 140, and the other end of the second connecting shaft 130 is fixed to the second pedal assembly 150. Therefore, the first connecting shaft 120 and the second connecting shaft 130 are used to control the twisting of the first pedal assembly 140 and the second pedal assembly 150 on the left and right sides. The first connecting shaft 120 and the second connecting shaft 130 are independent from each other and do not interfere with each other during traveling, such that the rotation is more flexible. In addition, the first output shaft 161 and the second output shaft 171 are also relatively independent, such that the problem that the first pedal assembly 140 on one side is affected by the second pedal assembly 150 on the other side when rotated can be avoided, thereby effectively improving the turning controllability.

Furthermore, the entire self-balancing vehicle 100 is reasonably designed. The first pedal assembly 140 and the second pedal assembly 150 are located on both sides of the intermediate bracket 110, respectively. The intermediate bracket 110 serves both as a connection and as a battery holder for mounting the battery pack 115. The battery pack 115 is mounted at the bottom of the intermediate bracket 110, such that the specific gravity of the entire self-balancing vehicle 100 may be symmetrical. Thus, the self-balancing vehicle 100 is easier to control and more stable during traveling, thereby protecting the user's personal safety.

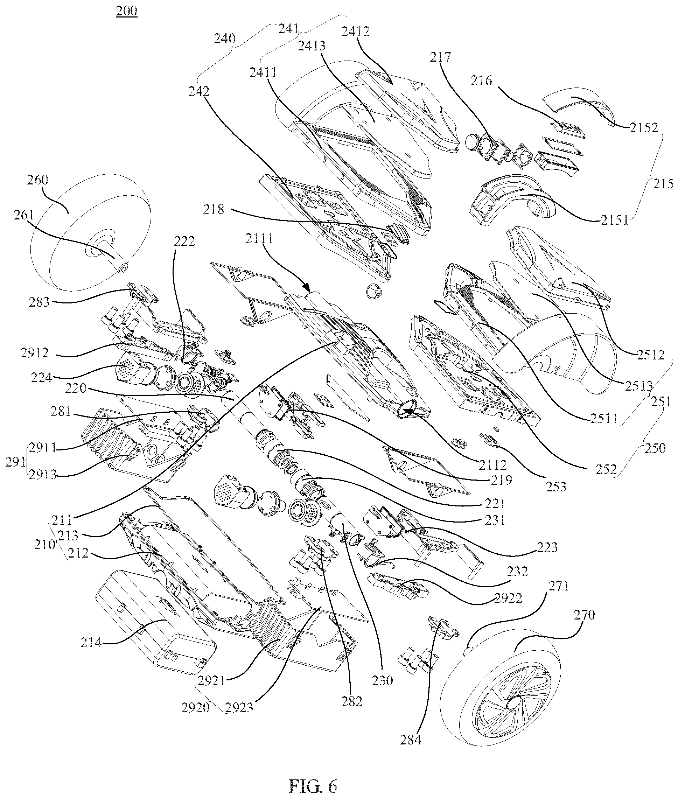

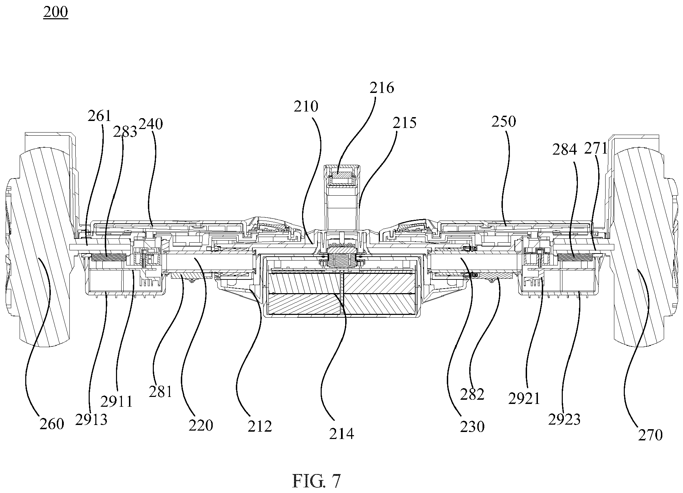

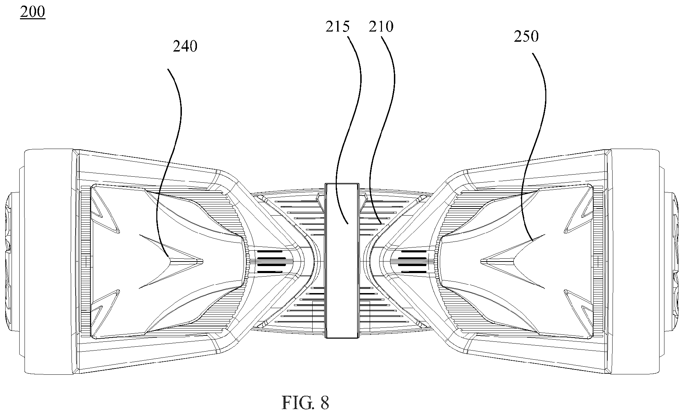

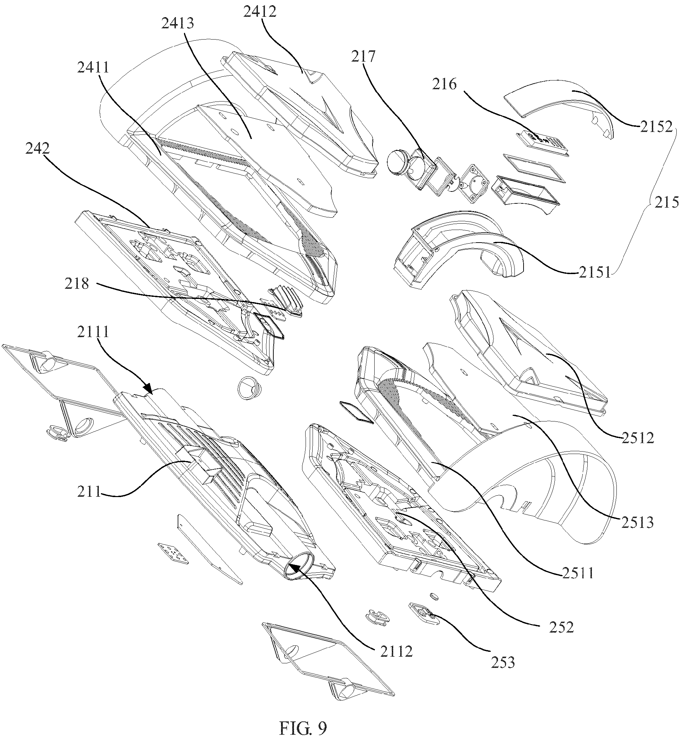

Referring to FIG. 6 to FIG. 10, a self-balancing vehicle 200 according to another embodiment is provided. Specifically, in the illustrated embodiment, the self-balancing vehicle 200 includes an intermediate bracket 210, a first connecting shaft 220, a second connecting shaft 230, a first pedal assembly 240, a second pedal assembly 250, a first motor 260, and a second motor 270.

One end of the first connecting shaft 220 and one end of the second connecting shaft 230 are respectively disposed on two opposite sides of the intermediate bracket 210, the first connecting shaft 220 and the second connecting shaft 230 are spaced apart from one another and are located at the same height. For example, the first connecting shaft 220 and the second connecting shaft 230 are substantially symmetrically disposed on both sides of the intermediate bracket 210, on the left side and right side, respectively.

The first connecting shaft 220 and the second connecting shaft 230 are rotatable with respect to the intermediate bracket 210, respectively. For example, one end of the first connecting shaft 220 is sleeved by a first bearing 221, and one end of the second connecting shaft 230 is sleeved by a second bearing 231 to effect that the first connecting shaft 220 and the second connecting shaft 230 are rotatable with respect to the intermediate bracket 210, respectively.

The intermediate bracket 210 includes a bracket body 211 and a bracket lower cover 212. A sealing ring 213 may further provided between the bracket body 211 and the bracket lower cover 212 to ensure its sealing property. The bracket body 211 defines a first receiving hole 2111 and a second receiving hole 2112. The first receiving hole 2111 and the second receiving hole 211 are spaced apart from one another. One end of the first connecting shaft 220 extends through the first receiving hole 2111, and one end of the second connecting shaft 230 extends through the second receiving hole 2112. The one end of the first connecting shaft 220 and the one end of the second connecting shaft 230 are spaced apart from one another, such that the first connecting shaft 220 and the second connecting shaft 230 do not affect each other. The first bearing 221 is received in the first receiving hole 2111, and the second bearing 231 is received in the second receiving hole 2112.

Specifically, in the illustrated embodiment, the first bearing 221 and the second bearing 231 may both be needle bearings to adapt a case where a radial dimension is small. Of course, in alternative embodiments, the first bearing 221 and the second bearing 231 may also be other types of bearings.

The first connecting shaft 220 may be a hollow shaft, the second connecting shaft 230 may also be a hollow shaft, such that weights of the first connecting shaft 220 and the second connecting shaft 230 is reduced. Thus, the weight of the entire self-balancing vehicle 200 may also be reduced.

The other end of the first connecting shaft 220 is fixed to the first pedal assembly 240. The other end of the second connecting shaft 230 is fixed to the second pedal assembly 250. The first pedal assembly 240 and the second pedal assembly 250 are located on both sides of the intermediate bracket 210, respectively. In other words, the first pedal assembly 240 and the intermediate bracket 210 are located on opposite ends of the first connecting shaft 220, respectively. The second pedal assembly 250 and the intermediate bracket 210 are located on opposite ends of the second connecting shaft 230, respectively.

The first connecting shaft 220 is sleeved by a first torsional spring 222, and the second connecting shaft 220 is sleeved by a second torsional spring 232. The first torsional spring 222 and the second torsional spring 232 are used to control the intermediate support 210 to be in a horizontal state to prevent tilting forward and backward.

Specifically, in the illustrated embodiment, the self-balancing vehicle further includes a first pressing block 281 and a second pressing block 282. The first connecting shaft 220 is fixed to the first pedal assembly 240 via the first pressing block 281. The second connecting shaft 230 is fixed to the second pedal assembly 250 via the second pressing block 282. For example, the first pressing block 281 may be fixed to the first pedal assembly 240 by means of a fastener such as a screw, such that the first connecting shaft 220 extends through an annular space which is cooperatively defined by the first pressing block 281 and the first pedal assembly 240. The second pressing block 282 is same as the first pressing block 181.

The first pedal assembly 240 includes a first pedal portion 241 and a first support frame 242. The first pedal portion 241 is disposed on the first support frame 242. The other end of the first connecting shaft 220 is disposed on the first support frame 242. For example, the first support frame 242 may be made of a hardware material. Of course, in alternative embodiments, the first support frame 242 may also be other materials.

The first pedal portion 241 includes a first upper housing 2411, a first pedal 2412, and a first pedal bracket 2413. The first pedal 2413 is located between the first upper housing 2411 and the first pedal bracket 2412, the first pedal bracket 2411 is disposed on the first support frame 242. Specifically, the first pedal 2412 may be made of a silicone material. The first upper housing 2411 and the first support frame 242 can be connected to each other via bolts.

The second pedal assembly 250 includes a second pedal portion 251 and a second support frame 252. The second pedal portion 251 is disposed on the second support frame 252. The other end of the second connecting shaft 230 is disposed on the second support frame 252. For example, the second support frame 252 may be made of a hardware material. Of course, in alternative embodiments, the second support frame 252 may also be other materials.

The second pedal portion 251 includes a second upper housing 2511, a second pedal 2512, and a second pedal bracket 2513. The second pedal 2513 is located between the second upper housing 2511 and the second pedal bracket 2512, the second pedal bracket 2511 is disposed on the second support frame 252. Specifically, the second pedal 2512 may be made of a silicone material. The second upper housing 2511 and the second support frame 252 can be connected to each other via bolts.

The first pedal assembly 240 further includes a first pressure sensor (not shown), which is disposed on the first support frame 242. For example, the first support frame 242 may define a panel hole, and the first pressure sensor is accommodated in the panel hole. A pad may be further provided between the first pressure sensor and the first pedal bracket 2413. By using the first pressure sensor instead of photoelectric switch, the problem that simple use of the photoelectric switch may easily lead to stuck can be addressed.

The second pedal assembly 250 further includes a second pressure sensor 253, which is disposed on the second support frame 252. For example, the second support frame 252 may define a panel hole, and the second pressure sensor 253 is accommodated in the panel hole. A pad may be further provided between the second pressure sensor 253 and the second pedal bracket 2513. By using the second pressure sensor 253 instead of photoelectric switch, the problem that simple use of the photoelectric switch may easily lead to stuck can be addressed.

The first motor 260 includes a first output shaft 261, which is rotatably disposed on the first pedal assembly 240. Specifically, the first output shaft 261 is rotatably disposed on the first support frame 242. For example, the first output shaft 261 may be rotatably disposed on the first pedal assembly 240 via a third pressing block 283. Specifically, the first output shaft 261 is rotatably disposed on the first support frame 242 via the third pressing block 283. The outer side of the first motor 260 may form a normally travelling wheel by providing an outer tire.

The second motor 270 includes a second output shaft 271, which is rotatably disposed on the second pedal assembly 250. Specifically, the second output shaft 271 is rotatably disposed on the second support frame 252. For example, the second output shaft 271 may be rotatably disposed on the second pedal assembly 250 via a fourth pressing block 284. Specifically, the second output shaft 271 is rotatably disposed on the second support frame 252 via the fourth pressing block 284. The outer side of the second motor 270 may form a normally travelling wheel by providing an outer tire.

The first output shaft 261 is hollow, the second output shaft 271 is hollow, thereby reducing weights of the first output shaft 261 and the second output shaft 271, such that the weight of the entire self-balancing vehicle 200 may be reduced.

The first output shaft 261 and the first connecting shaft 220 are staggeredly arranged at different heights, and the second output shaft 271 and the second connecting shaft 230 are staggeredly arranged at different heights. Therefore, there is no direct contact between the first output shaft 261 and the first connecting shaft 220, thus no friction occurs. The first output shaft 261 and the first connecting shaft 220 are independent from each other and do not interfere with each other. There is also no direct contact between the second output shaft 271 and the second connecting shaft 230, thus no friction occurs. The second output shaft 271 and the second connecting shaft 230 are independent from each other and do not interfere with each other. It is possible to effectively improve the stability of the vehicle during traveling at high speed and turning.

Specifically, in the illustrated embodiment, the first output shaft 261 is arranged higher than the first connecting shaft 220. For example, a height of the first output shaft 261 from the ground is 12 mm to 17 mm, preferably 15.7 mm, greater than a height of the first connecting shaft from the ground. The second output shaft 271 is arranged higher than the second connecting shaft 230. For example, a height of the second output shaft 271 from the ground is 12 mm to 17 mm, preferably 15.7 mm, greater than a height of the second connecting shaft from the ground.

Specifically, in the illustrated embodiment, the self-balancing vehicle 200 further includes a battery pack 214. The battery pack 214 is removably mounted at the bottom of the intermediate bracket 210 and is located on the middle position of the bottom. Specifically, the battery pack 214 is removably disposed on a bottom of the bracket lower cover 212. For example, a middle portion of the bracket lower cover 212 may define a receiving groove to accommodate the battery pack 214. Specifically, the battery pack 214 may be provided in the receiving groove via a snap-fit. Therefore, the intermediate bracket 210 serves as a bridge connecting the first connecting shaft 220 and the second connecting shaft 230 as well as a battery case in which the battery pack 214 is mounted.

Since the battery pack 214 is mounted at the bottom of the intermediate bracket 210, the center of gravity of the entire self-balancing vehicle 200 is lowered, thereby increasing the stability during travel. The battery pack 214 is assembled to the intermediate bracket 210 via snap-fit in a quick-release manner, such that it is convenient to disassemble and install, and is advantageous for ventilation, heat dissipation and replacement. During transportation, the battery pack 214 can be disassembled separately, which can greatly improve the safety of the transportation.

Specifically, in the illustrated embodiment, a first chip assembly 291 and a second chip assembly 292 are further included. The first chip assembly 291 includes a first chip 2911, a first chip holder 2912, and a first chip cartridge 2913. The first chip 2911 is disposed on the first chip holder 2912, and the first chip holder is disposed on the first support frame 242. The first chip 2911 and the first chip holder 2912 are both received in the first chip cartridge 2913 to protect the first chip 2911 from being affected by external moisture. Specifically, the first pressing block 281 also can be received in the first chip cartridge 2913 to make the structure more compact and occupy less external space.

The second chip assembly 292 includes a second chip 2921, a second chip holder 2922, and a second chip cartridge 2923. The second chip 2921 is disposed on the second chip holder 2922, and the second chip holder 2922 is disposed on the second support frame 252. The second chip 2921 and the second chip holder 2922 are both received in the second chip cartridge 2923 to protect the second chip 2921 from being affected by external moisture. Specifically, the second pressing block 282 also can be received in the second chip cartridge 2923 to make the structure more compact and occupy less external space. By the detection and control of the built-in first chip 2911 and the second chip 2921, various required operations of the self-balancing vehicle 200 can be achieved.

Specifically, in the illustrated embodiment, the self-balancing vehicle 200 further includes a handle 215, which is disposed on the intermediate bracket 210. The entire vehicle may be quickly and easily lifted via the handle 215. The handle 215 includes a handle body 2151 and a handle cover 2152. The handle body 2151 and the handle cover 2152 cooperatively define a receiving cavity.

The self-balancing vehicle 200 further includes a display screen 216, which is received in the receiving cavity. The handle cover 2152 may be transparent or translucent, such that contents of the display screen 216 within the receiving cavity can be displayed to the user through the handle cover 2152. The display screen 216 may display the temperature, speed, communication status, and power usage of the vehicle.

Specifically, in the illustrated embodiment, the self-balancing vehicle 200 further includes at least one of a headlight 217, an attitude lamp 218, a left turn signal 219, a right turn signal 223, and a horn 224. The headlight 217 is mainly used for illuminating, such that in the case of low visibility, it can illuminate the front to assist users in the dark environment. The attitude lamp 218 is used to display the attitudes of the electric balancing vehicle 200, such as advancing, retreating, braking, and the like. The left turn signal 219 and the right turn signal 223 are used to display the turn, respectively. The horn 224 is used to alert the front pedestrian or vehicle.

The assembly process of the self-balancing vehicle 200 is as follows:

The first upper housing 2411, the first pedal and the first pedal bracket 2413 are assembled to form the first pedal portion 241, and then the first pedal portion 241 is assembled onto the first support frame 242 to form the first pedal assembly 240. One end of the first connecting shaft 220 and the first bearing 221 are disposed on one side of the intermediate bracket 210. One end of the second connecting shaft 230 and the second bearing 231 are disposed on the other side of the intermediate bracket 210. The first torsional spring 222 is sleeved on the first connecting shaft 220, and the second torsional spring 232 is sleeved on the second connecting shaft 220. The other end of the first connecting shaft 220 is fixed to the first pedal assembly 240. The other end of the second connecting shaft 230 is fixed to the second pedal assembly 250. The first motor 260 is rotatably disposed on the first pedal assembly 240 via the third pressing block 283. The second motor 270 is rotatably disposed on the second pedal assembly 250 via the fourth pressing block 284. The first chip assembly 291 is disposed at the bottom of the first pedal assembly 240, the second chip assembly 292 is disposed at the bottom of the second pedal assembly 250, and the battery pack 214 is then disposed at the bottom of the intermediate bracket 210.

In the self-balancing vehicle 200, one end of the first connecting shaft 220 and one end of the second connecting shaft 230 are respectively disposed on two opposite sides of the intermediate bracket 210, and the first connecting shaft 220 and the second connecting shaft 230 are rotatable with respect to the intermediate bracket 210, respectively. The other end of the first connecting shaft 220 is fixed to the first pedal assembly 240, and the other end of the second connecting shaft 230 is fixed to the second pedal assembly 250. Therefore, the first connecting shaft 220 and the second connecting shaft 230 are used to control the twisting of the first pedal assembly 240 and the second pedal assembly 250 on the left and right sides. The first connecting shaft 220 and the second connecting shaft 230 are independent from each other and do not interfere with each other during traveling, such that the rotation is more flexible. In addition, the first output shaft 261 and the second output shaft 271 are also relatively independent, such that the problem that the first pedal assembly 240 on one side is affected by the second pedal assembly 250 on the other side when rotated can be avoided, thereby effectively improving the turning controllability.

Furthermore, the entire self-balancing vehicle 200 is reasonably designed. The first pedal assembly 240 and the second pedal assembly 250 are located on both sides of the intermediate bracket 210, respectively. The intermediate bracket 210 serves both as a connection and as a battery holder for mounting the battery pack 214. The battery pack 214 is mounted at the bottom of the intermediate bracket 210, such that the specific gravity of the entire self-balancing vehicle 200 may be symmetrical. Thus, the self-balancing vehicle 100 is easier to control and more stable during traveling, thereby protecting the user's personal safety.

The foregoing implementations are merely specific embodiments of the present disclosure, but are not intended to limit the protection scope of the present disclosure. It should be noted that any variation or replacement readily figured out by a person skilled in the art within the technical scope disclosed in the present invention shall all fall within the protection scope of the present invention. Therefore, the protection scope of the present invention shall be subject to the protection scope of the appended claims.

## Claims

1. A self-balancing vehicle, comprising:
an intermediate bracket, a first connecting shaft, a second connecting shaft, a first pedal assembly, a second pedal assembly, a first motor, and a second motor;
wherein one end of the first connecting shaft and one end of the second connecting shaft are respectively disposed on two opposite sides of the intermediate bracket, the first connecting shaft and the second connecting shaft are spaced apart from one another and are located at the same height, the first connecting shaft and the second connecting shaft are rotatable with respect to the intermediate bracket, respectively;
wherein the other end of the first connecting shaft is fixed to the first pedal assembly, the other end of the second connecting shaft is fixed to the second pedal assembly, the first pedal assembly and the second pedal assembly are located on both sides of the intermediate bracket, respectively;
wherein the first motor comprises a first output shaft, the first output shaft is rotatably disposed on the first pedal assembly, the second motor comprises a second output shaft, the second output shaft is rotatably disposed on the second pedal assembly.

2. The self-balancing vehicle according to claim 1, wherein one end of the first connecting shaft is sleeved by a first bearing, one end of the second connecting shaft is sleeved by a second bearing.

3. The self-balancing vehicle according to claim 1, wherein the intermediate bracket defines a first receiving hole and a second receiving hole, the first receiving hole and the second receiving hole are spaced apart from one another, one end of the first connecting shaft extends through the first receiving hole, one end of the second connecting shaft extends through the second receiving hole.

4. The self-balancing vehicle according to claim 1, wherein a bottom of the first pedal assembly is provided with a first guiding post, the first guiding post is sleeved by a first spring, the intermediate bracket defines a first guiding hole, one end of the first guiding post extends through the first guiding hole, a bottom of the second pedal assembly is provided with a second guiding post, the second guiding post is sleeved by a second spring, the intermediate bracket defines a second guiding hole, one end of the second guiding post extends through the second guiding hole.

5. The self-balancing vehicle according to claim 1, further comprising a battery pack, wherein the battery pack is removably mounted at a bottom of the intermediate bracket and is located on a middle position of the bottom.

6. The self-balancing vehicle according to claim 5, wherein the battery pack is mounted at the bottom of the intermediate bracket via a snap-fit.

7. The self-balancing vehicle according to claim 1, wherein the first pedal assembly comprises a first pedal portion and a first support frame, the first pedal portion is disposed on the first support frame, the other end of the first connecting shaft is disposed on the first support frame, the first output shaft is disposed on the first support frame; the second pedal assembly comprises a second pedal portion and a second support frame, the second pedal portion is disposed on the second support frame, the other end of the second connecting shaft is disposed on the second support frame, the second output shaft is disposed on the second support frame.

8. The self-balancing vehicle according to claim 7, wherein the first pedal portion comprises a first upper housing, a first pedal, and a first pedal bracket, the first pedal is located between the first upper housing and the first pedal bracket, the first pedal bracket is disposed on the first support frame; the second pedal portion comprises a second upper housing, a second pedal, and a second pedal bracket, the second pedal is located between the second upper housing and the second pedal bracket, the second pedal bracket is disposed on the second support frame.

9. The self-balancing vehicle according to claim 8, wherein the first pedal assembly further comprises a first pressure sensor, the first pressure sensor is disposed on the first support frame; the second pedal assembly further comprises a second pressure sensor, the second pressure sensor is disposed on the second support frame.

10. The self-balancing vehicle according to claim 1, further comprising a first pressing block and a second pressing block, wherein the first connecting shaft is fixed to the first pedal assembly via the first pressing block, the second connecting shaft is fixed to the second pedal assembly via the second pressing block; and/or
the self-balancing vehicle further comprising a third pressing block and a fourth pressing block, wherein the first output shaft is rotatably disposed on the first pedal assembly via the third pressing block, the second output shaft is rotatably disposed on the second pedal assembly via the fourth pressing block.

11. The self-balancing vehicle according to claim 1, further comprising a first chip assembly and a second chip assembly, the first chip assembly comprises a first chip, a first chip holder, and a first chip cartridge, the first chip is disposed on the first chip holder, the first chip holder is disposed in the first chip cartridge, the first chip cartridge is disposed on the first pedal assembly; the second chip assembly comprises a second chip, a second chip holder, and a second chip cartridge, the second chip is disposed on the second chip holder, the second chip holder is disposed in the second chip cartridge, the second chip cartridge is disposed on the second pedal assembly.

12. The self-balancing vehicle according to claim 1, wherein the first connecting shaft is a hollow shaft, the second connecting shaft is a hollow shaft; and/or
the first output shaft is hollow, the second output shaft is hollow.

13. The self-balancing vehicle according to claim 1, wherein the first connecting shaft is sleeved by a first torsional spring, the second connecting shaft is sleeved by a second torsional spring.

14. The self-balancing vehicle according to claim 5, wherein the intermediate bracket comprises a bracket body and a bracket lower cover, the bracket body defines a first receiving hole and a second receiving hole, the first receiving hole and the second receiving hole are spaced apart from one another, one end of the first connecting shaft extends through the first receiving hole, one end of the second connecting shaft extends through the second receiving hole, the battery pack is removably disposed on a bottom of the bracket lower cover.

15. The self-balancing vehicle according to claim 7, wherein the first pedal portion comprises a first upper housing, a first pedal, and a second pedal bracket, the first pedal bracket is located between the first upper housing and the first pedal, the first upper housing is disposed on the first support frame; the second pedal portion comprises a second upper housing, a second pedal, and a second pedal bracket, the second pedal bracket is located between the second upper housing and the second pedal, the second upper housing is disposed on the second support frame.

16. The self-balancing vehicle according to claim 1, wherein the first output shaft and the first connecting shaft are staggeredly arranged at different heights, the second output shaft and the second connecting shaft are staggeredly arranged at different heights.

17. The self-balancing vehicle according to claim 16, wherein a height of the first output shaft from the ground is 12 mm to 17 mm greater than a height of the first connecting shaft from the ground; a height of the second output shaft from the ground is 12 mm to 17 mm greater than a height of the second connecting shaft from the ground.

18. The self-balancing vehicle according to claim 1, further comprising a handle, wherein the handle is disposed on the intermediate bracket.

19. The self-balancing vehicle according to claim 18, further comprising a display screen, wherein the handle comprises a handle body and a handle cover, the handle body and the handle cover cooperatively define a receiving cavity, the display screen is received in the receiving cavity.

20. The self-balancing vehicle according to claim 1, further comprising at least one of a headlight, an attitude lamp, a left turn signal, a right turn signal, and a horn.
